Europäisches Patentamt

European Patent Office

Office européen des brevets

(11) Publication number: **0 293 052**
**A2**

# EUROPEAN PATENT APPLICATION

(21) Application number: 88201048.1

(51) Int. Cl.⁴: **G01D 9/40**

(22) Date of filing: 25.05.88

(30) Priority: 26.05.87 HU 239787

(43) Date of publication of application:
30.11.88 Bulletin 88/48

(84) Designated Contracting States:
AT DE FR GB NL SE

(71) Applicant: **Magyar Allami Eötvös Loránd
Geofizikai Intezet
Columbus u. 17-23
H-1145 Budapest(HU)**

Applicant: **Magyar Allami Eötvös Loránd
Geofizikai Intézet GEODOT Müszaki Fejlesztö
Leányvállalat**

**Budapest(HU)**

(72) Inventor: **Gohér, Ferenc, Dr.
Vincellér u. 26/B.I.2.
H-1113 Budapest(HU)**
Inventor: **Hatlaczki, István
Kálvária u. 8.
H-2233 Ecser(HU)**
Inventor: **Mészáros, József
Régifóti u. 35.
H-1152 Budapest(HU)**
Inventor: **Mészáros, Károly
Erdösor u. 12. IV.58.
H-1046 Budapest(HU)**
Inventor: **Müller, Pál, Dr.
Mohai u. 17.
H-1116 Budapest(HU)**
Inventor: **Szombatfalvi, Zoltán
Csalán u. 39/A fszt.3.
H-1025 Budapest(HU)**
Inventor: **Triff, Tibor
Dongó u. 16.
H-1149 Budapest(HU)**
Inventor: **Vass, Lajos
Zsókavár u. 2.XII.59.
H-1157 Budapest(HU)**
Inventor: **Zong, Lajos
Kalocsai u. 65. II.6.
H-1141 Budapest(HU)**

(74) Representative: **de Vries, Johannes Hendrik
Fokke
Octrooibureau Los en Stigter B.V. P.O. Box
20052
NL-1000 HB Amsterdam(NL)**

EP 0 293 052 A2

(54) **Interactive intelligent scanning plotter, especially for displaying pieces of information obtained from geophysical measurements.**

(57) An interactive intelligent scanning plotter, for displaying pieces of information obtained especially from geophysical measurements, having a chart advancing unit (4), a plotting means moved perpendicular to the direction of chart advancing and parallel with the chart surface, further having a moving direction and position sensor (511) fixed to ·said plotting means as well as a plotting position sensor (5) consisting of a basis element (512) attached to the travel guide of the of the plotting means, as well as an image sensor (52, 52/a) clamped to the plotting means. The plotting means consists advantageously of electrodynamic plotting head (1) arranged to form a planar matrix parallel to the chart surface. The electronic plotting head (1) has, at the end of a bracket (12), a plotting head (11) rotatable assumed axle (13) and an electromagnetic armature (14) clamped to the bracket (12), the armature (14) being fixed as a single- or two-armed lever in its fulcrum by an energy storing torsional axle (151), and being operated by a working electromagnet (161), as well as by a prestressing electromagnet (162).

The plotting roller (11) is driven at its periphery through an ink transfer element (22) and inked by a rotating inking roller (21) connected to an ink well (23). Inking roller (21) is driven by a flexible driving element (25) arranged parallel with the chart surface, through driving roller (26) by means of rim drive.

Fig.1

## INTERACTIVE INTELLIGENT SCANNING PLOTTER, ESPECIALLY FOR DISPLAYING PIECES OF INFORMATION OBTAINED FROM GEOPHYSICAL MEASUREMENTS

The invention relates to an interactive intelligent scanning plotter, especially suitable for displaying maps and pieces of digital information obtained from geophysical measurements, plotted in transparent coloured ink.

Several types of direct plotters are known in addition to the phototechnical and typographical methods, for preparing coloured records of digital information. Such plotters can be divided in two groups, depending on the size of (generally paper) sheats used as information carriers.

Devices plotting on sheets use definite size leafs of drawing paper generally fixed in their position, whereas in the case of strip-chart plotters, paper is advanced as required. As reagard plotting management also two systems have been established in practice, i.e. the x-y plotters and the scanning plotters. The equipment covered by the present invention is a direct-writing plotter drawing onto a charts in scanning mode of operation. Closest to this system are the known colour plotters of the ink-jet type preferably comprising mechanical plotting heads described in the Hungarian patent specification No. 170 596.

The disadvantages of plotters of the ink-jet types are the consequences of their complicated construction and poor resolving power. The script resolution of the plotters provided with electromechanical plotting heads is better, their construction is simpler and they are cheaper, but their disadvantage is that the ink supply to the plotting element is objectionable, the heads dry up when out of use with changing demand, the ink tends to spill, so that the tonal values, and the colour saturation vary with the pattern and colour composition of the image. A common deficiency of the various systems is the incapability of returning to a given point or area of an image, after the chart has been moved forward since both the advancing of the paper and definition of the plotting head position are incremental, and also their plotting speed is in many cases lower than what could be employed economically.

The property of known plotters being unsuitable for adding new information to existing drawings, may be of particularly important disadvantage in cases, when additional information to be added is of limited extent (e.g. slight changes with respect to the basic set of data occur), nevertheless the entire set of basic information (e.g. maps, gedogic columns etc.) has to be plotted newly and repeatedly.

The aim of the present invention is to eliminate the above deficiencies by means of an electromechanical plotter exhibiting the known advantage of simplicity of the plotting system, however, having a higher plotting speed then those known so far and being suitable for adding directed (addressed) pieces of information to already existing drawings.

The present invention is based on the combination of three perceptions.

First the plotting speed can be increased by operating several plotting elements simultaneously and in addition, by increasing the plotting speed of each individual plotting element by means of mechanical energy storage and prestressing.

Secondly, the proposed dynamic inking system matched to the physico-chemical properties of the employed ink and interposing certain, additional elements ensure optimum and uniform ink supply, without the risk of spilling and drying up when it is out of use.

Thirdly, the problem of resetting as regards both chart advance and plotting head localization, can be solved by combining the plotting system with the reading system, by entering orientation signals and introducing a sectionalized incremental position sensing system, moreover a further increase of plotting speed can be achieved by omitting the passage through point of the chart where no addition of new pieces of information is required.

Based on the above recognition, the present invention relates to a plotter for displaying pieces of information resulting from geophysical measurements, the plotter being provided with a chart advancing unit and a plotting means moved perpendicular to the direction of advancement and parallel to the chart, surface and where said plotting means is an electromechanical plotting head to which a dynamic inking unit and an electronic control unit are coupled, further several electromechanical plotting heads being advantgageously arranged in matrix form, preferably as a planar matrix, paralell to the chart surface. The equipment is provided with a sectionalized incremental position sensing unit connected with its output to one of the inputs of the electronic control unit, while to the input of the incremental position sensing unit a plotting position sensing and/or chart position sensing unit is connected. To the input of the chart position sensor, the output of the chart advancing unit, whereas to the sectionalized incremental position sensing unit and/or chart position sensing unit the image sensing unit is connected, where the picture sensing unit(s) is (are) in fixed position with respect to the electromechanical plotting head(s) and/or to the travel guide thereof. It is of advantage, if an image digitazing unit is connected to the output of the image sensing unit.

The plotting position sensor consists of an incremental and/or a sectionalized basis element fixed to the travel guide of the plotting means and comprises a moving direction sensor and a position sensor fixed to said plotting means.

The electromechanical plotting head complying with the invention consists of an electrical/mechanical converter and a plotting element coupled to said converter through a spring-supported mechanical transmission. The electrical/mechanical converter may advantageously be of the electrodynamical, magnetostrictive or piezoelectric system, and the plotting element is a roller.

The electrodynamical plotting head couplying with to invention has a plotting roller rotatably fixed an axle at the end of a bracket and an electromagnetic armature attached to said bracket. Coupled to the electromagnetic armature there is an electromagnetic driving element comprising a working electromagnet and a prestressing electromagnet.

The electronic control unit contains a storage unit connected to the image signal inputs, whereas the output of the storage unit and the plotting position output of the position detector unit is coupled - through the plotting control unit accommodated in the electronic control unit - to the electromechanical plotting head, further an image transforming unit and a control logic unit are connected to said storage unit, finally, to the input of the paper advancing unit the output of the chart control unit accommodated in the electronic control unit, is connected, and to the chart position sensing unit and to the control logic unit, the output of the chart control unit is connected, while to the input of the chart control unit also the plotting position output of the position sensing unit is attached.

To maintain connection with the data source it is advantageous to connect the electronic control unit through an input interface and to couple an operator's unit with the latter.

The electromagnetic armature is attached to an energy storage spring (advantageously attached to the torsional axle in the fulerum as a single or double arm lever), whereas the working electromagnet and the prestressing electromagnet are arranged on two opposite sides of the electromagnetic armature facing one another.

The dynamic inking unit proposed by the present invention incorporates a plotting roller an inking element rotatably supported by an axle, arranged parallel to the axis of the plotting roller and rotated by the latter through a rim drive, further, an inking roller linked up with the ink well expediently through a felt pad and/or roller(s), as well as a roller drive keeping the inking roller in rotation.

It is of advantage for the matrix arrangement to have several, expediently two plotting rollers coupled to the ink well. It is also advantageous to use replaceable cartridge type ink wells. Preferably, the roller drive may consist of a roller running along a guide such as a rigid rail arranged perpendicular to the chart travel, or rolling on a flexible element, such as, expediently, a ribbon, wire or cord, said driving roller being attached to the axle of the inking roller (and preferably having the same diameter as the latter).

It is expedient to keep the replaceable ink well in movement during operation. For moving the replaceable ink well, it is preferable to arrange the latter so as to permit its angular displacement around an axis, whereas the ink transfer element is a (felt) cylinder driven from the periphery of the inking roller(s), through a rim drive and fixed to the ink well to cause angular displacement of the latter.

The equipment complying with the invention will be described in detail herebelow, with reference to an embodiment shown by way of example, wherein references is made to the attached drawings. In the drawings

Figure 1 illustrates the characteristic elements of the equipment, and

Figure 2 is the block diagram of the equipment.

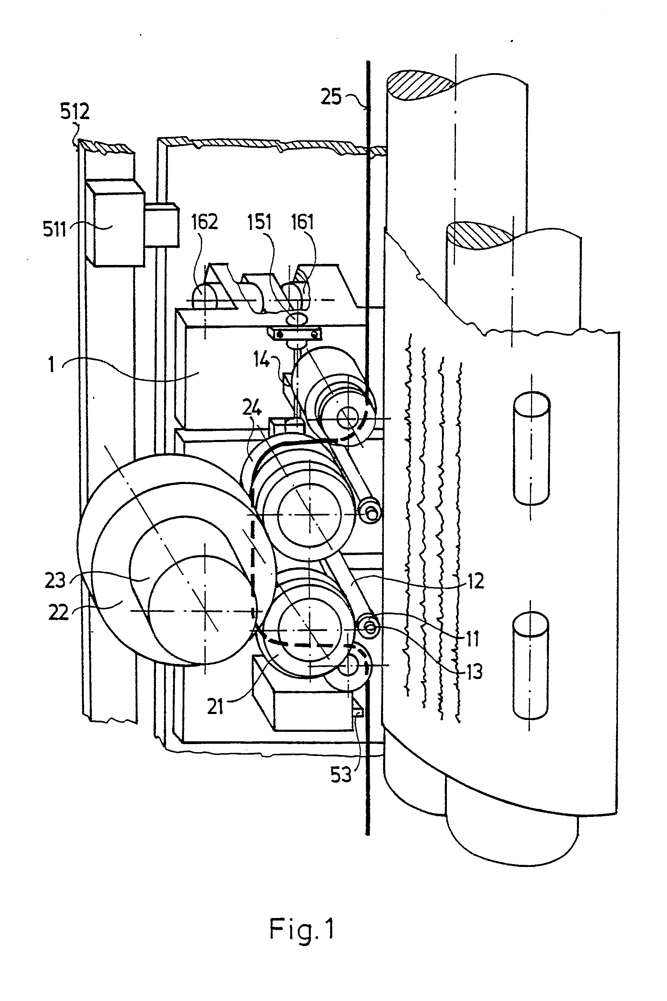

As shown in Figure 1, the equipment is provided with a plotting means moved perpendicular to the chart travel and parallel to the chart surface, with a moving-direction and incremental position sensing unit 511 attached to the plotting means further, with a plotting position detector 51 coupled to the former and fixed to the guide path of the plotting means and comprising a basis element 512, as well as with an image detector 52 mounted to the plotting means. The plotting means consists of an electromechanical plotting head 1 and of a dynamic inking unit 2. The electromechanical writing head 1 is provided with a writing roller 11 rotatable around an axle 13 mounted to the end of a bracket 12 and with an electromagnetic armature 14 fixed to the bracket 12. At its opposite sides the electromagnetic armature 14 is magnetically attached to an electromagnetic driving unit 16 built up of a working electromagnet 161 and a prestressing electromagnet 162. The electromagnetic armature 14 is fixed in its fulcrum by a torsional axle 151 acting as an energy storage spring 15. To the plotting roller 11 the dynamic inking unit 2 is connected. The dynamic inking unit 2 comprises an inking roller 21 connected to a replaceable ink well 23 through an ink transfer element 22 (preferably made of felt) driving the plotting roller 11 at ist periphery as rim drive and arranged rotatably around an axis parallel to the axle 13 of the plotting roller 11 and a roller drive unit 24 for driving the inking roller 21. The roller drive unit 24 consists of a driving element 25 and a driving roller 26, the latter being driven by said driving element 25 through a rim drive and being keyed to the axle of the inking roller 21 and having expediently the same diameter as the inking roller 21. The driving element 25 may be a flexible ribbon, plain or stranded wire or cord arranged in parallel with the plane of the chart and perpendicular to the direction of advancing the chart. To the ink well 23 an ink supply element 22 and two inking rollers 21, and through them, two plotting rollers 11 are connected.

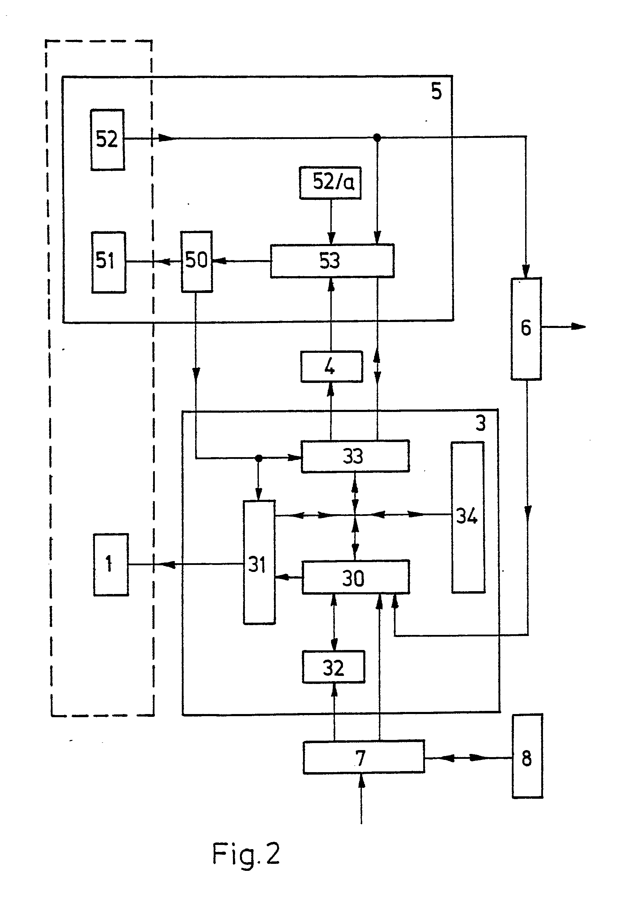

In the block diagram of Figure 2 an electromechanical plotting head 1, a plotting position sensor 51 and image sensors 52 and 52/a, all mounted on the structural part encircled by broken lines in the figure, are movable parallel to the chart plane and perpendicular to the direction of the chart travel. To the electromechanical plotting head 1 the output of a plotting control unit 31 arranged in an electronic control unit 3 is connected. To the input of the plotting control unit 31 the outputs of a storage unit 30 and a sectionalized incremental plotting position sensor 50, as well as a control logic unit 34 arranged in the electronic control unit 3 are connected. To the storage unit 30 an image transformation unit 32 and the control logic unit 34 are coupled. Also a chart control unit 33 is accommodated in the electronic control unit 3, and its output is connected to the input of a chart advancing unit 4. The chart control unit 33 is linked up also with the sectionalized incremental plotting position sensor 50, with a chart position sensor 53 and with the control logic unit 34.

The outputs of the plotting position sensor 51 are connected to the input of the sectionalized incremental plotting position sensor 50, whereas the output of an image sensing unit 52 is linked up with the inputs of the sectionalized incremental plotting position sensing unit 50, as well as with inputs of an image digitizer 6 and the chart position sensor 53. The output of the image digitizer 6 is connected to the electronic control unit 3, within the latter to a storage unit 30. The output of the chart position sensor 53 is connected to one of the inputs of the sectionalized incremental plotting position sensing unit 50. The data inputs of the storage unit 30 and image tansforming unit 32, both arranged in the electronic control unit 3, are linked up with the data source through an input interface 7, and to the control input of the input interface 7 the output of an operator's unit 8 is connected.

The equipment shown in the attached figures operates in the following way: while the chart is at standstill, the plotting means moves parallel to the chart surface and perpendicular to the chart advance direction.

Moving of the plotting means takes place in itself in the known way, expediently along a nail system. The instantaneous position of the plotting rollers 11 with respect to the fixed basic element 512 is sensed by a moving direction and position detector 511 moving together with the plotting means as being fixed to them, and transfers it to the electronic control unit 3. The instantaneous position of each plotting roller 11 is compared by the electronic control unit 3 stored image information to be plotted as obtained through input interface 7, and as a result of this comparison, a plotting command is issued toward plotting roller 11, if a new image point is to be entered. After the plotting means having passed across the chart in one direction, the chart is displaced through a number of rows equal to the number of rows of the electromechanical plotting head matrix 1, then, along with the moving of the plotting means in opposite direction, the process repeats itself.

Preceding the issuance of a plotting command the electromagnetic armature 14 is kept "in cocked condition" by the excitation state of the prestressing electromagnet 162 acting against the spring torque of the torsional axle 151. Under the effect of a plotting command the excitation is removed from the prestressing electromagnet 162 and the working electromagnet 161 gets excited. The electromagnetic armature 14 is now accelerated from its rest position into plotting position by means of a duplicate force, namely by the attraction of the working electromagnet 161 and by the spring force stored in the torsional axle 151. The axle 151 is adjusted so as to keep the plotting roller 11 in plotting position by maintaining it prestressed in the direction opposite to its rest position, under the effect of the working electromagnet 161.

This arrangement offers a combined operating advantage of applying a double prestressing action, whereby not only the operating speed is considerably increased by accelerating the motion of the electromagnetic armature 14 and of the other parts attached to it with double force from their rest position, but also a firm stroke can be ensured by correctly selecting the attractive force of the working electromagnet 161 and the retracting work of the torsional axle 151 becoming effective in its plotting position. At the same time the energy stored in the torsional axle 151 exerts also a damping effect on the moving system, reducing thereby the stress imposed on the plotting mechanism.

For flawless operation is necessary that the surface of plotting roller 11 in contact with the chart be always properly inked and its peripheral speed be equal to the travelling speed of the plotting head matrix, i.e. the plotting roller 11 should roll slip-free on the chart surface. From the altering operation the requirement follows that the sense of rotation of the plotting roller 11 has to be reversed depending on the direction of the travel of the plotting head matrix. This triple task is solved according to the invention by the dynamic inking unit 2 by arranging the driving element 25 being a strung wire, in the present case, to drive along its periphery the driving roller 26 rolling under the effect of the travel of the plotting head matrix thereon and driving thereby the inking roller 21. The inking roller 21 drives along its periphery the plotting roller 11, thereby inking it at the same time. Hence, the magnitude and the direction of the peripheral speed of the plotting roller 11 are always equal to the magnitude and direction of the travel speed of the plotting head matrix. Ink from the replaceable ink well 23 is transferred to inking roller 21 by an appropriate ink transfer element 22, i.e. by a felt roller in the present case. On the replaceable ink well 23 inking capillary(-ies) is (are) provided through which ink is fed into the ink transfer felt 22. The replaceable ink well 23 is rotated by means of vibration caused by the inking rollers 21 through the roller-shaped replaceable ink transporting element 22.

The rotation of the replaceable ink well 23, as well as the size of each inking capillary are selected according to the physico-chemical properties, of the ink, especially to its viscosity, its surface tension and to the absorbing capability of the ink transfer element 22 in such a way that while the replaceable ink well 23 is at standstill, no ink well get into the ink transfer felt 22 either equally preventing thereby the "pilling" and "drying up" of the inking element at standstill of the plotter and ensuring immediate automatic resumption of ink transfer when the plotter is restarted.

The actual position of the plotting mechanism, i.e. that of the plotting rollers 11 is monitored by the plotting position sensor 51 consisting of the moving direction and position sensor 511 and of the basis element 512. As plotting position sensors 51 optical or magnetic arrangements known in themselves, just as well as electrodynamic setups may advantageously be employed, incorporating grids excited by alternating current as basis elements 512 and advantageously inductive receivers with spacings matched to the raster pitch of the chart as moving direction and position sensors 511.

In its simplest form, the sectionalized incremental plotting position sensor 50 is based on a reversible counter, the bi-directional input of which is selected by the actual moving direction, and its stepping is given by the displacement. In this case the actual position of the plotting means is available at the output of the reversible counter. Relative position of each plotting roller 11 with respect to the above basis value is stored, so it is known at any time.

From the point of view of interference suppression it is advantageous to provide position sensor 51 with several scales of different graduations, instead of a single scale. This offers the possibility of addressing positions and zones (sections) by entering known series and/or parallel codes, i.e. said positions (zones) can be made independently identifiable. In its simplest form, this requires two scales of which one gives the incremental data of the elementary image-point distance, and the other is divided in zones of a considerably wider pitch. It is expedient, in that case, also to address the zones within their own band in the series code system. Namley, so any stepping error (pulse loss or excessive stepping caused by an interference) that may occur in the reversible counter of the sectionalized incremental plotting position sensing unit 50, becomes correctible at each zone limit crossing.

Operation of the image sensor 52 being in fixed position with respect to the plotting rollers 11 is known in itself. The task of the equipment is to read the entered reference signals and/or image contents. The reference signals can be typically of three kinds: test signals, chart length signals and chart/width reference signals.

Chart width reference signals are zone signals expediently coded, entered in the chart, when the first image is plotted. When repeating a plotting, the longitudinal position of the chart is determined by the chart position sensor 53 by forming an absolute co-ordinate from a chart length reference signal, then by counting the chart advancing stepping signals obtained from chart advancing unit 4 the chart position is defined. In order to prevent accumulation of errors possibly resulting from chart stepping, it is advantageous to evaluate each chart length reference signal individually, and to correct each incremental displacement resulting from the chart stepping signals correspondingly.

Also the chart width reference signal is entered the chart together with the first plotting. In simplest case, this consists of a single longitudinal line, expendiently drawn along the edge of the chart, serving for ensuring proper positioning of plottings, if the chart fails to assume - in the direction perpendicular to the chart travel -the same position as during previous plottings. Should such a misalignment occur, the sectionalized incremental plotting position sensing unit 50 performs the correction of data provided by the plotting position sensor 51 from the chart width reference signal read by the image sensor 52, i.e. by giving the momentary position of the plotting rollers 11 with respect to the width reference signal transmitted to the chart.

Thereby it is ensured the orientation of any newly entered pieces of information onto the existing chart will be correct with respect to the chart both in longitudinal and lateral directions.

The test signals may be of widely varying kind. The most tipical ones of them are those directed to checking the moving of plotting means and for determining certain positions, such as that required as an adjustment test for determining the positions of the various plotting rollers 11 relative to each other and with respect to the plotting position sensor 51. The other group of tests comprises the functional tests. In this case continuous reading of the actually plotted (image) information by the image sensor 52 is provided. The pieces of (image) information read out are fed back through the image digitizer 6 into the electronic control unit 3 for comparing with the pieces of the plotted information. This way the equipment automatically checks its own operation end, in the case of normalfunctioning or, if an operator's intervention is necessary (e.g. on running-out of the ink), by the electronic control unit 3 the operator is informed through the input interface 7, displaying the trouble on the operator's unit 8.

The operator's unit 8, advantageously incorporating a graphical or raster type display, otherwise, serves for accomplishing the interactive feature of the equipment.

As it follows from the preceding, operation of the equipment, permits digitalization of already existing images and recording of these images . digitally. This way, in a given image orientation can be performed not only relative to the longitudinal and lateral markers, but also according to the image content and interactive interventions are also rendered possible.

Especially the application of the image sensor 52 fixed in its position with respect to the chart travel, for indicating the longitudinal markers, the chart end, chart runout or jamming may offer advantages, the operation of which is otherwise identical with that of the other, moving type of image sensing unit 52 fixed to the plotting means. By the chart advancing unit 4 not only incremental, but also periodical positioning (directly addressed) signals can be issued to the chart position sensing unit 53, when it is of advantage if the integral multiple of these sections are given by the directly addressed longitudinal frequencies entered into the chart preferably also in coded form.

Also belonging to the functions of the electronic control unit 3 are the storing and valuation of the piedes of image information to be plotted. In the simplest case, the valuation consists of controlling the plotting means, e.g. not to go to places on the edge of the chart where no plotting is to be made or of accelerated advancing the chart over sections where also no plotting is required.

The electronic control unit 3, however, not only performs the storage of image information to be plotted but also can comprise pieces of certain permanent information, whereby the repeated generation of the last can be avoided.

The simplest examples of pieces of permanent information are: the alphanumeric set of characters and the various rasters, co-ordinates, stored inscriptions, symbols and other graphical elements which can so be edited into the image by means of the operator's unit 8, either in subordinated, co-ordinated, or superordinated form. The co-ordinated form is of advantage that in overlapping points of two pieces of information their sum (as regards to the contrast, colour and colour saturation) will appear, e.g., in the case of yellow and red components, the colour of the image-point will be orange.

The electronic control unit 3, adjusted from the operator's unit 8 through the input interface 7 is suitable also for performing further image editing functions, which can then be visually followed on the operator's unit 8. In the simplest cases, this renders possible the superposition, rescaling,recolouring and resampling of the images, or by way of image transformation a renewed image can be edited from available image information.

The image transformation is performed on the image, stored in the storage unit 30 by the image transforming unit 32. Some typical image transformations: differentiation, integration, logarithmization, editing of gradient images, filterings, sortings, as well as non-linear co-ordinate transformations such as sigth-angle transformation of aerial photographs. Generally, an image transformation is a matrix/matrix transformation, where also the transformation function is a matrix. The transformation matrix may be constant, in that case it can be stored, or may be fed into the image transforming unit 32 through the interface 7.

The simplest example of a stored image transformation function is the image transformation functuion serving for correcting the physical data of the equipment, the production geometry data of the plotting head matrix, said function being entered in the course of production of the equipment and possibly modified from time to time.

The transformation matrix, however, may be a variable as well. In that case, the image transformation matrix is generated by the image transforming unit 32 itself from the image content and from pieces of information entered eventually later and continuously modifying as required the image transformation matrix.

Since the horizontal definition (resolution) of the display consists of a much lower number of scanning elements than that of the image-points displayed within each horizontal line by the equipment complying with the invention, and since the number of lines on the display is limited, as opposed to the practically unlimited number of lines the equipment proposed, it is expedient to operate the display in "window" mode over the set of data. For the purpose of image editing mause, light pencil, line digitizer and other known structural elements may be coupled to the operator's unit 8.

This high degree of operational conformity is ensured by the fast that both the display and the equipment proposed by the invention are of the scanning system, so their image editing method is identical. This is of special advantage in cases, where the pieces of image information itself is generated in scanning mode, as with all video recordings, aerial and satellite photography.

## Claims

1. Interactive intelligent scanning plotter, especially for displaying pieces of information obtained from geophysical measurements, comprising a chart advancing unit, and a plotting means moved perpendicular to the direction of chart travel and parallel with the chart surface, **characterized by** said plotting means being an electromechanical plotting head (1) to which a dynamic inking unit (2) and an electronic control unit (3) are attached when advantageously at least two electromechanical plotting heads (1) are arranged in matrix form, expediently forming a planar matrix parallel with the chart surface, and to said electronic control unit (3) a position sensing unit (5) is connected.

2. The plotter as claimed in claim 1, **characterized by** having in its position sensing unit (5) a sectionalized incremental position sensing unit (50) connected with its output to one of the inputs of the electronic control unit (3), and having a plotting position sensing unit (51) and/or a chart position sensing unit (53), connected to the input of said control unit (5), and where a chart position sensing unit (53) is used, the output of a chart advancing unit (4) is coupled to the input of said chart position sensing unit (53).

3. The plotter as claimed in claim 1 or 2, **characterized by** having animage sensing unit (52) connected to the sectionalized incremental position sensing unit (50) and/or to the chart position sensing unit (53) of the position sensing unit (5).

4. The plotter as claimed in claim 2 or 3, **characterized by** having an image sensor (5) fixed in position with respect to the electromagnetic plotting head(s) (1) and/or an image sensor (52/a) fixed with respect to the travel guide of the said plotting head(s) (1).

5. The plotter as claimed in claim 3 or 4, **characterized by** having an image digitizing unit (6) connected to the output of the image sensing unit (52).

6. The plotter as claimed in any of claims 2 to 5, **characterized by** a plotting position sensor (51) consisting of a moving direction and position sensor (511) fixed in position with respect to the electromechanical plotting heads (1) and of a basis element (512) fixed with respect to the travel guide of the electromechanical plotting heads (1), where the plotting position sensor (51) is designed advantageously as a single- or multielement series and/or parallel coded unit.

7. The plotter as claimed in any one of claims 1 to 6, **characterized by** having in the electronic control unit (3) a storage unit (30) connected to the image signal inputs and/or to the output of the image digitizing unit (6), where the output of the storage unit, and the plotting position output of the position sensing unit (5) is connected through the plotting control unit (31) of the electronic control unit (3) to the electromechanical plotting head (1), whereas to the storage unit (30) an image transforming unit (32) and a control logic unit (34) is coupled, further, to the input of the chart advancing unit (4) the output of the chart control unit (33) arranged in the electronic control unit (3) and coupled to the chart position sensing unit (53) and to the control logic unit (34) is connected, finally, to the input of said chart control unit (33) also the chart position input of the position sensing unit (5) is coupled.

8. The plotter as claimed in any one of claims 1 to 7, **characterized by** having an input interface (7) connected to the electronic control unit (3).

9. The plotter as claimed in any one of claims 1 to 8, **characterized by** an operator's unit (8) connected to the input interface (7).

10. The plotter as claimed in claim 1, **characterized by** having an electromechanical plotting head (1) consisting of an electrical/mechanical converter and of a plotting head coupled to the former through a mechanical, spring-type transmission, where said electrical/mechanical converter may be either of electrodynamic, magnetostrictive or piezoeletric type, the plotting element being advantageously a plotting roller (11) rotatable around an axle (13).

11. The plotter as claimed in claim 10, **characterized by** having an electrodynamic converter, an electromagnetic driving unit (16) consisting of a working electromagnet (161) magnetically coupled to an electromagnetic armature (14) and of a prestressing electromagnet (162), whereas its mechanical transmission is composed of an electromagnetic armature (14) coupled to an energy storing spring, and of a bracket (12) clamped to said armature (14), with the axle of the plotting roller fixed to said bracket (12).

12. The plotter as claimed in claim 11, **characterized by** the energy storing spring (15) being a torsional axle (151) fixing the electromagnetic armature (14) in its fulcrum, as a single- or two-armed lever, with the working electromagnet (161) and the prestressing electromagnet (163) being advantageously arranged on the two sides of the armature (14) in juxtaposition.

13. The plotter as claimed in claim 1, **characterized by** a dynamic inking unit (2), comprising a plotting roller (11), an inking roller (21) driving said plotting roller (11) at its periphery by rim drive, and being connected to a replaceably ink well (23) through an ink transfer element (22) rotatably mounted on an axle arranged parallel to the axle (13) of said plotting roller, said transfer element (2) being expediently a piece of felt and/or roller's, finally a roller drive (24) for driving said inking roller (21).

14. The plotter as claimed in claim 13, **characterized by** having several, expediently two plotting rollers (11) connected to one replaceable ink well (23).

15. The plotter as claimed in claim 13 or 14, **characterized by** having a roller drive (24) in which the driving roller (26) is driven by the driving element (25) through a rim drive, the diameter of said driving roller (26) being expediently equal to that of the inking roller (21), to the axle of which said driving roller (26) is fixed.

16. The plotter as claimed in claim 15, **characterized by** the driving element (25) being a rigid rail or a flexible element, advantageously a ribbon, a plain or stranded wire or a chord, arranged perpendicular to the chart travel and parallel to the chart surface.

17. The plotter as claimed in claim 13, **characterized by** the replaceable ink well (23) being arranged movably, advantageously rotatably, and an ink well moving unit (27) attached to the ink well (23).

18. The plotter as claim in claim 17, **characterized by** the ink-well moving unit (27) being a roller-type ink transfer element (22) coupled to the replaceable ink well (23) through the inking roller(s) (21) fixed to said replaceable ink well (23) concentrically with its fulcrum.

Fig.1

Fig.2